# EUROPÄISCHE PATENTANMELDUNG

(11) **EP 2 080 927 A1**
(43) Veröffentlichungstag der Anmeldung: **22.07.2009**
(21) Anmeldenummer: 09150633.7
(22) Anmeldetag: 15.01.2009
(51) Int. Cl.: F16F 9/54

(54) **Überlastanzeige an Schwingungsdämpfern**

(30) Priorität: 19.01.2008 DE 102008005293
(71) Anmelder: ZF Friedrichshafen AG, 88038 Friedrichshafen (DE)
(72) Erfinder: Förster, Andreas, 97422 Schweinfurt (DE); Gilsdorf, Heinz-Joachim, 97499 Donnersdorf (DE); Gronewald, Jörg, 97424 Schweinfurt (DE); Marquar, Hendrik, 97422 Schweinfurt (DE); Stretz, Klaus, 97437 Haßfurt (DE)

(57) **Zusammenfassung**

Schwingungsdämpfer (1), umfassend einen mit Dämpfmedium gefüllten Zylinder (3), indem eine Verdrängerstange (5) axial beweglich angeordnet ist, wobei der Schwingungsdämpfer mindestens zwei Arbeitsräume (23,25,27) umfasst, wobei zwischen zwei Arbeitsräumen (23,25,27) mindestens ein Dämpfventil (19,21) angeordnet ist und das freie Ende der Verdrängerstange (5) mit einem Führungslager (7) verbunden ist, das den Anschluss an ein Fahrzeug ermöglicht, wobei das Führungslager (7) über einen Elastomerkörper (13) verfügt, der eine in Grenzen axiale Bewegung der Verdrängerstange (5) zum Fahrzeug ermöglicht, wobei der Schwingungsdämpfer (1) über eine dämpfkraftabhängige Überlastanzeige verfügt.

## Beschreibung

Die Erfindung betrifft eine Überlastanzeige an einem Schwingungsdämpfer gemäß dem Oberbegriff von Patentanspruch 1.

Bei einem Schwingungsdämpfer wird in Abhängigkeit der Federungsbewegung des Rades eine Reaktionskraft auf die Fahrzeugkarosserie übertragen. Die dabei auftretenden Kräfte können ein beachtliches Niveau erreichen. Bei extremen Belastungen, z.B. beim Überfahren einer Bordsteinkante, kann dies zu Beschädigungen am Schwingungsdämpfer selbst, an Karosserie- und/oder anderen Fahrzeugteilen führen.

Um bei einem Überlastfall die Fahrsicherheit, insbesondere die Lenkbarkeit des Fahrzeugs gewährleisten zu können, haben sich aus dem Stand der Technik verschiedene Lösungsvarianten entwickelt.

In der DE 101 05 098 C1 wird ein Schwingungsdämpfer mit einer Überlastsicherung beschrieben. Dafür wird die Dämpferkennlinie in drei Bereiche unterteilt, für welche verschiedene Sicherheitsvorkehrungen am Schwingungsdämpfer angebracht sind. Im ersten, dem Dämpferbereich, treten lediglich normale Dämpfkräfte auf, die kein Sicherheitsrisiko für Fahrzeug und Fahrzeugführer darstellen. Im darauffolgenden Sicherheitsbereich sind am Schwingungsdämpfer für größere Beanspruchungen beispielsweise elastische Teilabschnitte am Zylinderrohr ausgebildet, die eine Volumenvergrößerung des letzteren und damit einen Druckabbau im System ermöglichen. Für extreme auftretende Dämpfkräfte sind innerhalb des Schwingungsdämpfers Sollbruchstellen vorgesehen. Diese können z.B. in der Zylinderwand oder am Kolbenventil angebracht sein und ermöglichen durch die Vergrößerung eines Arbeitsraums einen schnellen Druckabbau im Überlastbereich. Dadurch wird zwar der Schwingungsdämpfer zerstört, nicht aber tragende Karosserieteile. Die Lenkbarkeit des Fahrzeuges bleibt damit erhalten.
Ähnliche Varianten zur Vermeidung von übermäßigen Dämpfkräften sind weithin bekannt. Beispielsweise wird auf die DE 42 36 150 A1 oder die DE 199 38 084 verwiesen.

Um Beschädigungen am Fahrzeug aufgrund übermäßiger Reaktionskräfte des Rades weitestgehend zu vermeiden, könnten auch von Seiten des Herstellers die Wandstärken der belasteten Bauteile entsprechend erhöht werden. Damit ist aber auch unausweichlich eine Gewichtserhöhung verbunden, die sich vor allem hinsichtlich der Forderung eines immer geringer werdenden Kraftstoffverbrauchs negativ auswirkt. So ist auch festzustellen, dass derartige sicherheitsgefährdende Belastungen nicht im normalen Fahrbetrieb, sondern nur in Ausnahmefällen auftreten, sodass Materialanhäufungen im Regelfall auf ein Minimum reduziert werden.

Sind nun tatsächlich Beschädigungen am Fahrzeug aufgetreten, stellt sich in der Praxis häufig die Frage, ob nun die Fahrzeugkomponenten von Seiten des Herstellers unzureichend ausgelegt waren, oder ob die Ursachen von Seiten des Fahrzeugführers herrühren, der möglicherweise durch eine unangemessene Fahrweise die Beschädigungen hervorgerufen haben könnte.

In der DE 198 03 174 C2 wird ein Schwingungsdämpferbeschrieben, wobei zu dessen Anbindung an eine Fahrzeugkarosserie eine Verdrängerstange gewindefrei mit einem Führungslager verbunden ist. Das Führungslager umfasst ein teilbares Gehäuse mit einem Deckel und einem Unterteil, zwischen denen ein Elastomerkörper verspannt ist, der beidseitig an einer Stützscheibe angeordnet ist. Konzentrisch zur Längsachse des Kolben-Zylinderaggregats angeordnete Befestigungsmittel am Führungslager ermöglichen die Anbindung. Derartige Lagerungen ermöglichen beispielsweise den Ausgleich herstellungsbedingter Toleranzen der Achse, dienen aber auch der Geräuschisolierung bei Schwingungen oberhalb von 30Hz.
Ähnliche Lagerausführungen werden in der DE 195 11 642 A1 oder im DE-GM 90 18 074 U1 beschrieben.

Die Aufgabe der vorliegenden Erfindung besteht darin, eine Vorrichtung zur Überlastanzeige am Fahrzeug zu entwickeln, die Aufschluss über vorangegangene Fahrzeugbeanspruchungen liefert.

Erfindungsgemäß wird die Aufgabe dadurch gelöst, dass der Schwingungsdämpfer über eine dämpfkraftabhängige Überlastanzeige verfügt.

Der Vorteil besteht darin, dass jederzeit nachgewiesen werden kann, ob das Fahrzeug einer zu hohen Belastung ausgesetzt wurde. Dies wird z.B. im Falle eines technischen Gutachtens bei einem Streitfall zwischen Fahrzeughersteller und Fahrzeugeigentümer(-führer) interessant. Kann eindeutig nachgewiesen werden, dass das Fahrzeug übermäßig beansprucht wurde, sind Auslegungsfehler bei Fahzeugkomponenten von Seiten des Herstellers auszuschließen.

Eine sehr einfache und kostengünstige Möglichkeit eine Überlastanzeige zu realisieren besteht darin, der mindestens einen elastischen Ventilscheibe eines Dämpfventils auf ihrer von der Durchtrittsöffnung abgewandten Seite eine plastisch verformbare Indikatorscheibe nachzuordnen. Diese kann während des Montageprozesses, bei dem z.B. die Ventilscheiben über eine Kolbenstange zu einem Kolbenventil geführt werden, einfach mit angefügt werden, was lediglich einen minimalen Mehraufwand zur Folge hat und dadurch leicht in laufende Serienfertigungen zu integrieren ist.

Eine andere Variante sieht vor, einen Dichtkörper in eine hohle Verdrängerstange dämpfmediumdicht einzupressen, wobei der Dichtkörper in Abhängigkeit des Dämpfdrucks axial verschiebbar ist.

Um ein Ausfliesen des Dämpfmediums in jedem Fall zu vermeiden ist es von Vorteil mindestens einen axialen Anschlag an der hohlen Verdrängerstange anzubringen, damit eine axiale Verschiebung des Dichtkörper über die Verdrängerstangenlänge hinaus vermieden werden kann. Wird eine Markierung auf der Innenmantelfläche der hohlen Kolbenstange angebracht, kann in Relation zu einem Bezugspunkt, vorteilhafterweise dem Fixpunkt beim Einpressen des Dichtkörpers, die Größe der Dämpfkraft auf den Dichtkörper gemessen und damit auch auf die Belastung auf das Fahrzeug geschlossen werden.

Da sich ein Schwingungsdämpfer aufgrund seiner Anbringung im Fahrzeug relativ zu diesem bewegt, besteht die Möglichkeit, die Überlastanzeige auf die Relativbewegung des Schwingungsdämpfers zum Fahrzeug auszurichten.
Dafür bietet sich besonders ein Zusammenwirken einer zum Fahrzeug ortsfesten Komponente mit der Verdrängerstange an. Die Verdrängerstange wirkt zumindest mittelbar als Gegenkomponente.

Wird im Überlastfall ein elektrisches Signal erzeugt, kann dieses mit Hilfe entsprechender Elektronik gemessen und gespeichert werden. Hierbei besteht sogar die Möglichkeit, diese mit einem Bordcomputer zu vernetzen, der dem Fahrzeugführer den Hinweis auf die Überlast auf das Fahrzeug signalisiert.

Eine mögliche Variante hierzu ist, das elektrische Signal durch das Aufeinandertreffen einer verdrängerstangenseitigen Kontaktfläche mit einer zum Fahrzeug ortsfesten Kontaktfläche zu erzeugen. Der Kontakt tritt nur bei einer Überlast auf, sodass die Anzahl der Überbelastungen gemessen werden kann.

Alternativ kann das elektrische Signal durch das Eintauchen des freien Endes der Verdrängerstange in eine zum Fahrzeug ortsfest angebrachte Tauchspule erzeugt werden. Mit Hilfe einer Tauchspule können mechanische Bewegungen in analoge elektrische Signale umgewandelt werden. Durch den Induktionsstrom, der durch die Bewegung des freien Endes der Kolbenstange hervorgerufen wird, lassen sich neben der Anzahl der Überlasten auch deren Intensität grob messen.
Dafür kann das freie Ende der Kolbenstange zumindest magnetisierbar ausgeführt sein.

Einfach zu realisieren ist des Weiteren, ein zum Fahrzeug ortsfest mit Indikatormittel befülltes Behältnis, welches im Überlastfall auf das freie Ende der Verdrängerstange trifft und dadurch sein Indikatormittel freigibt. Das mit Indikatormittel befüllte Behältnis kann z.B. ein einfacher Farbbeutel mit wetterfester Farbe sein. Durch den Farbaustritt wird die Überlast von außen sichtbar. Dadurch wird z.B. ein Mechaniker bei einer Inspektion auf eine mögliche Beschädigung am Fahrzeug aufgrund einer Überlast sofort hingewiesen.

Als Alternative hierzu kann im Überlastfall auch das freie Ende der Verdrängerstange mit einem zum Fahrzeug ortsfest angebrachten Indikatorblech in Kontakt treten. Das Indikatorblech kann beispielsweise als einfaches und relativ kostengünstiges Stanzteil gefertigt werden. Konstruktive Maßnahmen am Schwingungsdämpfer wären nicht notwendig. Als Indiz für eine Überlast bietet sich eine durch den Kontakt hervorgerufene plastische Verformung des Indikatorblechs an. Die plastische Verformung kann mit vorangegangenen Belastungstests verglichen werden und gibt so Aufschluss über die Höhe einer Überlast.
Optional könnte man das Indikatorblech auch mit einer Oberflächenbeschichtung versehen werden, welche unter Kontakt mit der Verdrängerstange veränderbar ist. Eine Möglichkeit wäre, dass eine Farbänderung der Oberflächenbeschichtung eintritt. Durch einen Vergleich mit einem entsprechenden Farbkatalog, bei dem jeder möglichen Farbe eine darauf erfolgte Krafteinwirkung zugewiesen ist, kann wiederum die Höhe einer Überlast grob ermittelt werden.

Eine Oberflächenbeschichtung könnte jedoch auch am freien Ende der Verdrängerstange aufgetragen sein, die auf einem Längenabschnitt unter Reibkontakt mit einem zum Fahrzeug ortsfesten Bauteil steht. Als ortsfestes Bauteil wäre eine Kratzfeder vorstellbar. Die auf das Fahrzeug einwirkende Belastung kennzeichnet sich über die Dämpfkraft des Schwingungsdämpfers in der Länge der Kratzspur auf der Oberflächenbeschichtung.

Wird das Gehäuse des Führungslagers vom freien Ende der Verdrängerstange durchdrungen, ist es von Vorteil dem Gehäuse zur Abdeckung des freien Endes der Verdrängerstange eine Kappe anzuschließen, wobei die Kappe ortsfest zum Fahrzeug angeordnet ist. Dadurch wird ein Schutz für die Verdrängerstange und das Führungslager vor eindringenden Schmutz geboten.

Ein wesentlicher Vorteil bietet sich an, wenn man die zum Fahrzeug ortsfeste Komponente innerhalb der Kappe anordnet. Durch die Implementierung einer der oben genannten Varianten in die Kappe, kann diese als Komplettbaugruppe in den Montageprozess integriert werden. Dadurch kann die Überlastanzeige durch Zusammenführen lediglich zweier Komponenten, der Baugruppe Kappe und des Schwingungsdämpfers, montiert werden.

Eine weitere Variante zur Überlastanzeige kann geschaffen werden, indem das Gehäuse über eine Ausnehmung verfügt, in welche sich der Elastomerkörper bei einer Axialbewegung der Verdrängerstange hineinverformt und sich dadurch zumindest optisch verändert. Die Ausnehmung kann z.B. durch eine einfache Bohrung im Gehäuse realisiert werden. Auf eine Nachbearbeitung, in Form einer Entgratung der Kanten, kann verzichtet werden. Wird der Elastomerkörper in die Bohrung hineinverformt, bilden sich am Elastomerkörper Druckstellen, die mit bekannten Maßwerten verglichen werden können.

Die Erfindung wird nachfolgend anhand der beiliegenden Zeichnungen beispielhaft erläutert:
- Fig. 1: Prinzipdarstellung eines Schwingungsdämpfers mit einem Führungslager an ein Fahrzeug
- Fig. 2: Dämpfventil mit einer Indikatorscheibe
- Fig. 3: Schwingungsdämpfer nach Fig. 1 mit einer Überdruckanzeige
- Fig. 4 - 7: Schwingungsdämpfer nach Fig. 1 mit mechanischer Überlastanzeige
- Fig. 8 - 9: Schwingungsdämpfer nach Fig. 1 mit elektrischer Überlastanzeige
- Fig. 10: Schwingungsdämpfer nach Fig. 1 mit optischer Überlastkontrolleinrichtung

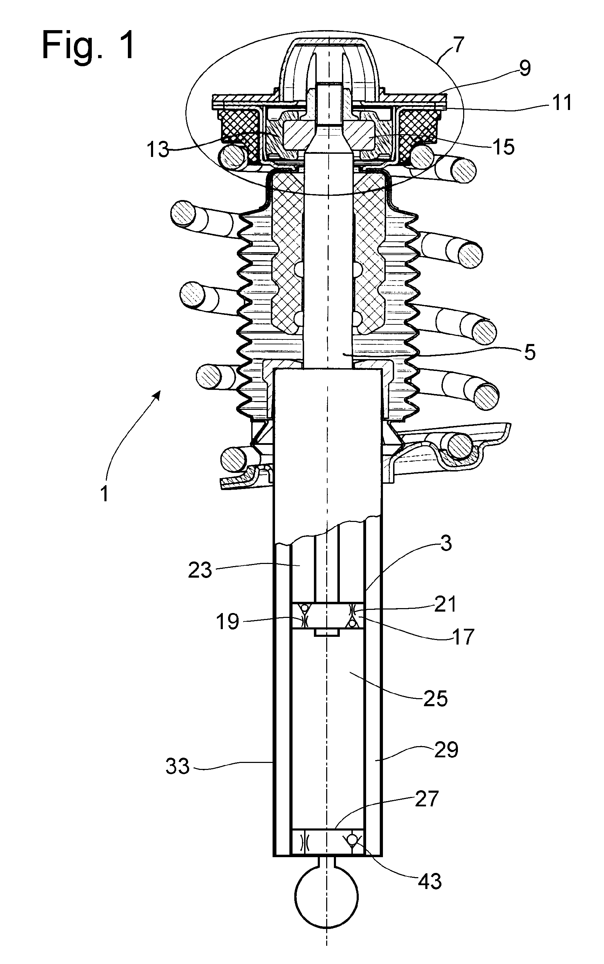

Die Figur 1 zeigt einen Schwingungsdämpfer 1 mit einem dämpfmediumgefüllten Zylinder 3, in dem eine Verdrängerstange 5 axial beweglich geführt ist. Die Verdrängerstange 5 weist an ihrem freien Ende ein Führungslager 7 für den Anschluss an einen Fahrzeugaufbau 9 auf. Das Führungslager 9 umfasst ein topfförmiges Gehäuse 11, in dem ein ringförmiger Elastomerkörper 13 verspannt ist. Der Elastomerkörper umschließt zumindest partiell eine Stützscheibe 15, die axial fest mit der Verdrängerstange 5 verbunden ist.

In diesem Ausführungsbeispiel ist an dem innenliegenden Ende der Verdrängerstange ein Kolben 17 befestigt, der mit mindestens einem Dämpfventil 19; 21 bestückt ist. Der Kolben 17 trennt einen ersten Arbeitsraum 23 von einem zweiten Arbeitsraum 25. Ggf. kann in Abhängigkeit der Bauform des Schwingungsdämpfers ein Bodenventil 27 zwischen dem zweiten Arbeitsraum 25 und einem ebenfalls als Arbeitsraum anzusehenden Ausgleichsraum 29 verwendet werden.

Allen nachfolgend beschriebenen Ausführungsvarianten des Schwingungsdämpfers 1 ist gemeinsam, dass sie über eine dämpfdruckabhängige Überlastanzeige verfügen.

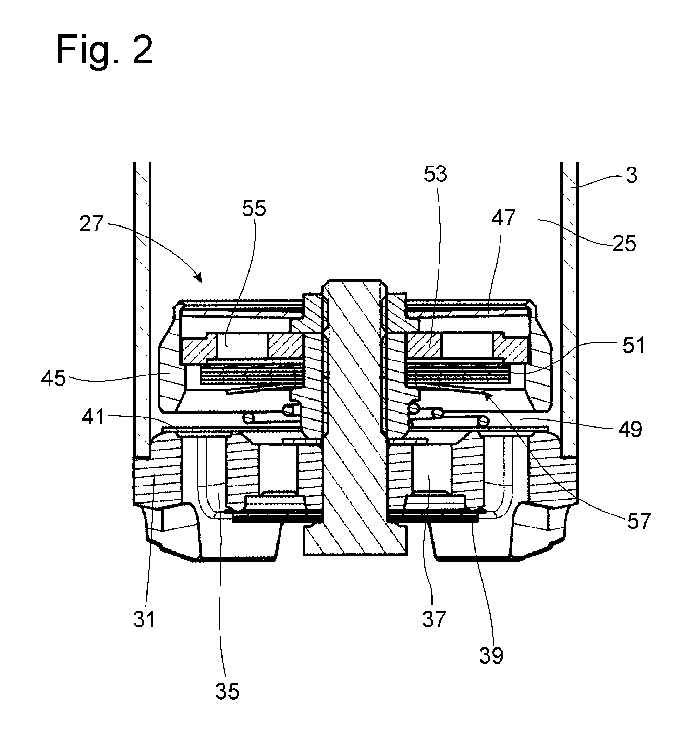

Die Fig. 2 beschreibt im Detail ein Bodenventil 27, mit einem Bodenventilkörper 31, der mittels des Zylinders 3 auf einem nicht dargestellten Boden eines äußeren Behälterrohres 33 (Fig. 1) verspannt ist. Im Bodenventilkörper sind auf getrennten Teilkreisdurchmessern Durchlasskanäle 35; 37 angeordnet. Die Durchlasskanäle 37 werden in Strömungsrichtung zum Ausgleichsraum 29 von mindestens einer Dämpfventilscheibe 39 mindestens teilweise abgedeckt. Der mindestens eine Durchlasskanal 35 bildet mit einer Abdeckscheibe 41 ein in Strömungsrichtung zum Arbeitsraum 25 sich öffnendes Rückschlagventil 43.

Axial beweglich zu dem Bodenventilkörper 31 ist eine Schließhülse 45 gelagert. Die Schließhülse wird von mindestens einer Scheibenfeder 47 in eine Öffnungsposition vorgespannt. Sobald auf die in Richtung des Arbeitsraums 25 projizierte Fläche der Scheibenfeder 47 und der Schließhülse ein größerer Staudruck wirkt als an der jeweiligen Unterseite der genannten Bauteilkombination, bewegt sich die Schließhülse in Richtung des Bodenventilkörpers 31 und verschließt einen Spalt 49, so dass das Dämpfmedium nicht mehr über einen engen Ringspalt zwischen der äußeren Mantelfläche der Schließhülse 45 und der Innenwandung des Zylinders 3 zu den Durchlasskanälen 37 strömen kann. Mit der Schließstellung der Schließhülse 45 ist eine deutliche Kraftkraftsteigerung bei einfahrender Verdrängerstange verbunden. Übersteigt die Dämpfkraft ein vorbestimmtes Niveau, dann hebt mindestens eine Ventilscheibe 51 von einem Überdruckventilkörper 53 ab, dessen dann freien Durchtrittsquerschnitte 55 in Strömungsrichtung in Reihe zu den Durchlasskanälen 37 zur Verfügung stehen. Damit wird die Dämpfkraft begrenzt. Der Abhubweg der Ventilscheibe(n) 51 wird von einer der mindestens einen Ventilscheibe bezogen auf die Durchtrittsquerschnitte nachgeordneten, plastisch verformbaren Indikatorscheibe 57 begrenzt. Wenn der Abhubweg der Ventilscheibe(n) 51 größer ist als für die Erzeugung einer Grenzdämpfkraft notwendig ist, dann wird die Indikatorscheibe 57 plastisch verformt. Bei einer Schadensbegutachtung am Schwingungsdämpfer kann diese Dämpfkraftüberlastung des Schwingungsdämpfers anhand der Raumform der Indikatorscheibe 57, die z. B. als Kreuz ausgeführt ist, festgestellt werden.

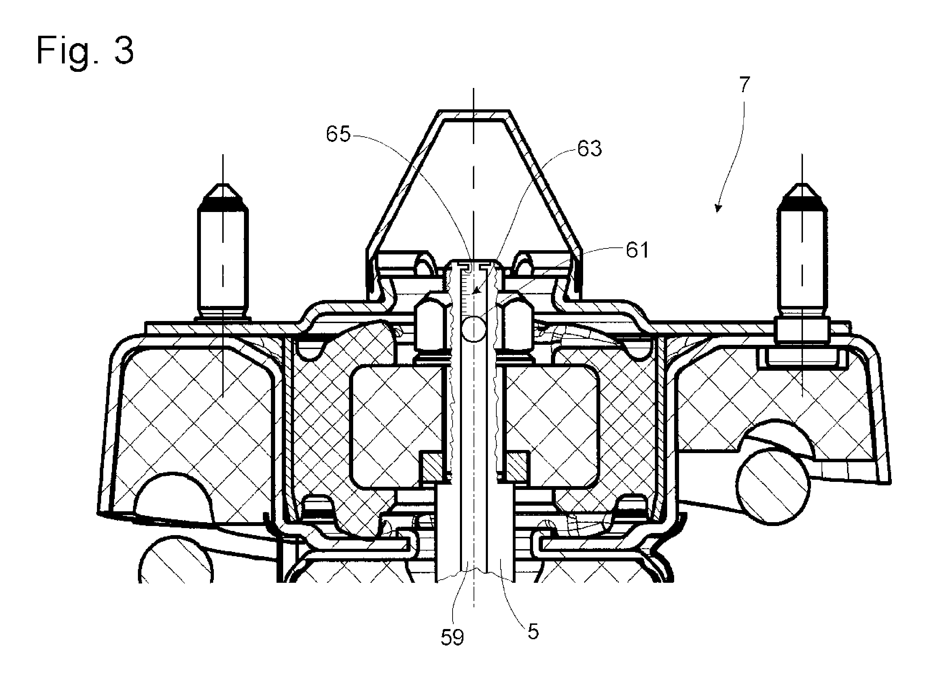

Bei der Variante nach Fig. 3 verfügt der Schwingungsdämpfer nach Fig. 1 über eine Verdrängerstange 5, die hohl ausgeführt und an ihrem in den Arbeitsraum 25 reichenden Ende offen ist. Innerhalb eines Kanals 59 der Verdrängerstange ist ein Dichtkörper 61 eingepresst, der einen Dämpfmediumaustritt am außenseitigen Ende im Bereich des Führungslagers 7 verhindert. Der Dichtkörper 61 ist trotz seiner Dichtfunktion axial beweglich. Der momentane Arbeitsdruck im zweiten Arbeitsraum 25 steht auch im Kanal 59 an und wirkt somit auch auf den Dichtkörper 61. Die Klemmkräfte des Dichtkörpers 61 sind so bemessen, dass die voreingestellte Position innerhalb des Kanals bei bestimmungsgemäßem Einsatz des Schwingungsdämpfers dauerhaft beibehalten wird. Mittels einer Markierung 63 im Kanal oder durch eine Tiefenmessung bezogen auf das Ende im Bereich des Führungslagers kann die Dichtkörperposition ohne Demontage des Schwingungsdämpfers bestimmt werden.

Bei einem übergroßen Betriebsdruck aufgrund einer zu schnellen Einfederungsbewegung der Verdrängerstange in den Zylinder steigt der Betriebsdruck im zweiten Arbeitsraum 25. Dieser Überdruck verschiebt den Dichtkörper 61 in Richtung eines verdrängerstangeseitigen axialen Anschlags 65, der die Verschiebebewegung des Dichtkörpers 61 begrenzt und damit auch eine Leckage verhindert.

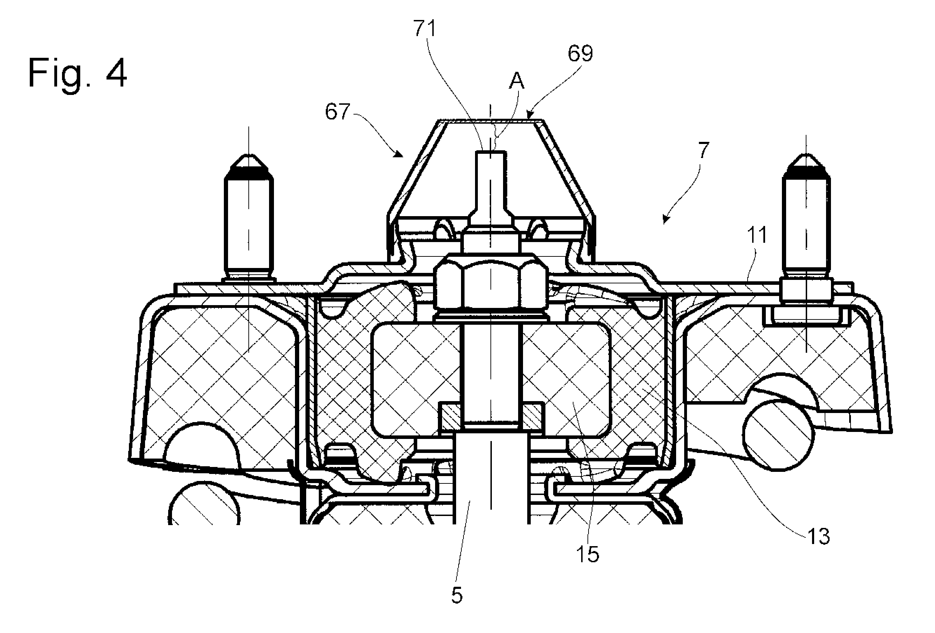

Die Ausführungsbeispiele nach den Figuren 4 bis 10 nutzen zur Überlastanzeige die Relativbewegung des Schwingungsdämpfers oder eines Bauteils des Schwingungsdämpfers zum Fahrzeug aus. In der Fig. 4 verfügt das Gehäuse 11 des Schwingungsdämpfers 1 über eine Kappe 67, wobei die Kappe im montierten Zustand des Schwingungsdämpfers 1 eine zum Fahrzeug ortsfeste Komponente darstellt. Wie bereits zur Fig. 1 beschrieben, umfasst das Führungslager 7 über einen ringförmigen Elastomerkörper 13, der die Verdrängerstange 5 in Grenzen axial beweglich zum Führungslager 7 und damit zur Kappe 67 hält. Die Kappe umfasst eine Indikatorfläche 69, die z. B. als Indikatorblech ausgeführt ist. Im Normalbetriebszustand verbleibt zwischen einer verdrängerstangeseitigen Kontaktfläche 71 ein Abstand A. Wenn die Kolbenstange jedoch aufgrund einer extremen Einfederungsbelastung über den Abstand A hinaus eine Verschiebebewegung ausführt, dann wird die Indikatorfläche 69 belastet. Je nach Ausführung kann die Indikatorfläche 69 bei einem Kontakt mit der Verdrängerstange 5 plastisch verformt werden, oder man nutzt z. B. Sprödbrucheigenschaften einer Oberflächenbeschichtung der Indikatorfläche aus. Als Oberflächenbeschichtung könnte z. B. eine Keramikschicht dienen.

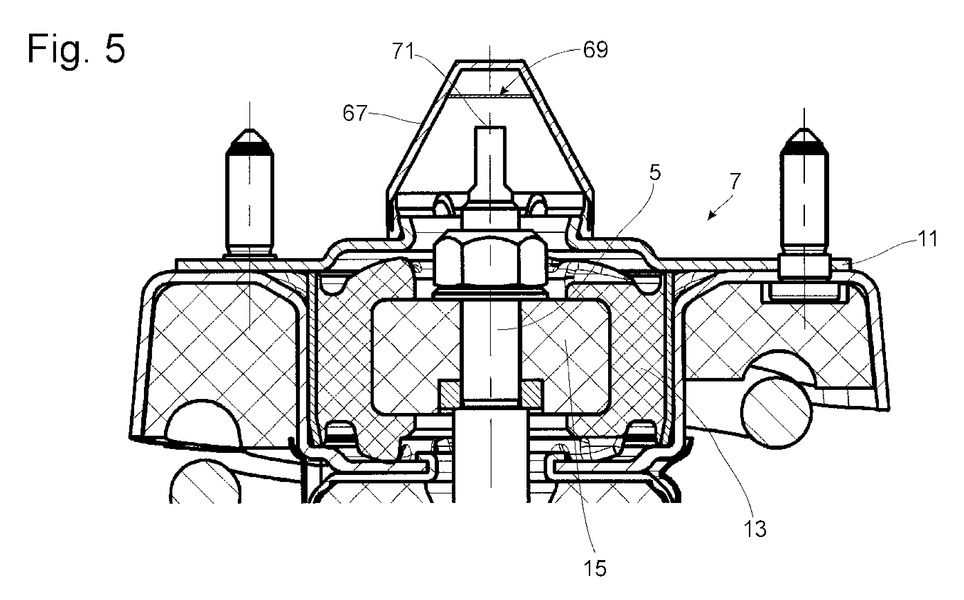

Das Funktionsprinzip nach Fig. 5 ist identisch mit der Ausführung nach Fig. 4. Abweichend bildet die Indikatorfläche 69 keine äußere Wandung der Kappe 67, sondern ist innerhalb des Innenraums angeordnet, so dass ein eventuelles Schwingverhalten der Indikatorfläche keine hörbaren Geräusche verursacht.

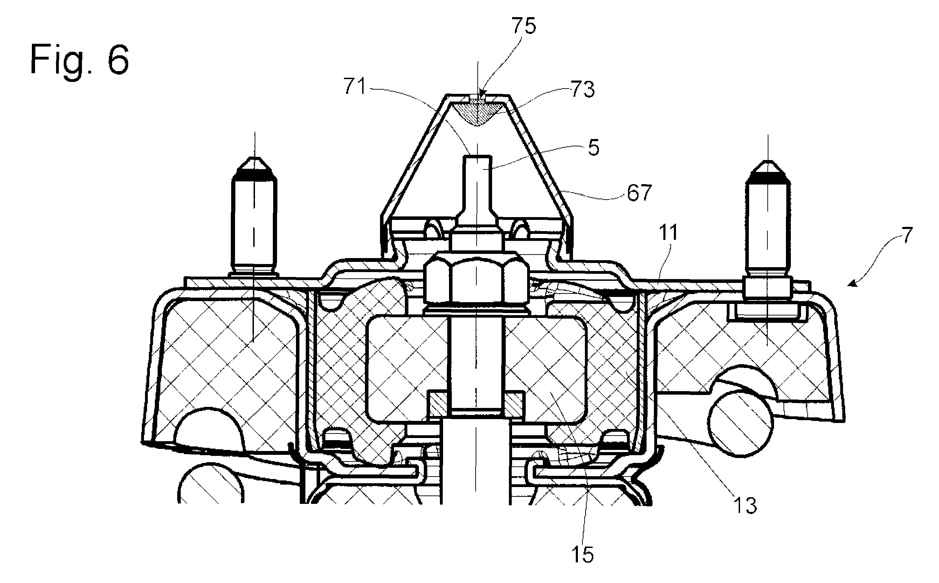

Die Variante nach Fig. 6 zeigt eine Überlastanzeige, die dem Funktionsprinzip der Fig. 4 und 5 folgt, jedoch anstatt einer Indikatorfläche ein zum Fahrzeug ortsfestes mit Indikatormittel, z. B. Farbe, befülltes Behältnis 73 aufweist. Bei einem Kontakt der Verdrängerstange 5 mit dem Behältnis 73 wird das Indikatormittel freigegeben. Ggf. kann das Behältnis über eine Membrane 75 als Sollbruchstelle in der Kappe 67 verfügen, so dass eine aufgetretene Überlastsituation sehr leicht optisch erkennbar ist.

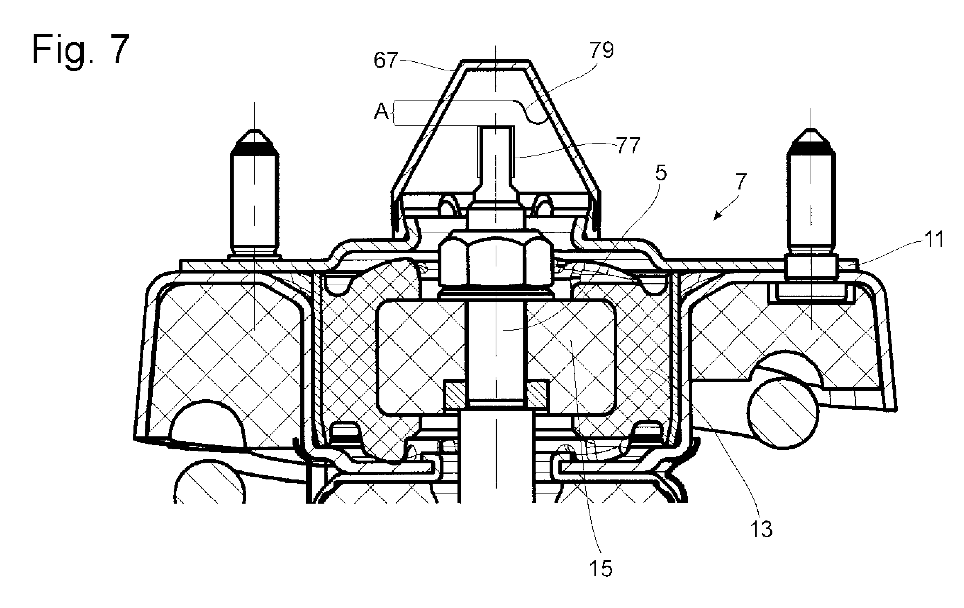

Eine weitere Möglichkeit für eine Überlastanzeige ist in der Fig. 7 dargestellt. An der Innenseite der Kappe 67 ist ein mit der einer Mantelfläche 77 der Verdrängerstange 5 zusammenwirkbares Übertragungselement 79. Die Mantelfläche kann z. B. farbig beschichtet sein, so dass ein Kontakt des Übertragungselements als Kratzspur erkennbar ist. Das Übertragungselement 79 besteht bevorzugt aus einem elastischen Werkstoff, so dass die Bewegungsfreiheit der Verdrängerstange keinesfalls eingeschränkt ist. Wenn der Abstand A aufgrund einer Überlast auf den Schwingungsdämpfer und einer damit verbundenen Axialbewegung der Verdrängerstange überwunden ist, dann erzeugt das Übertragungselement ein Kontaktbild auf der Mantelfläche 77 der Verdrängerstange.

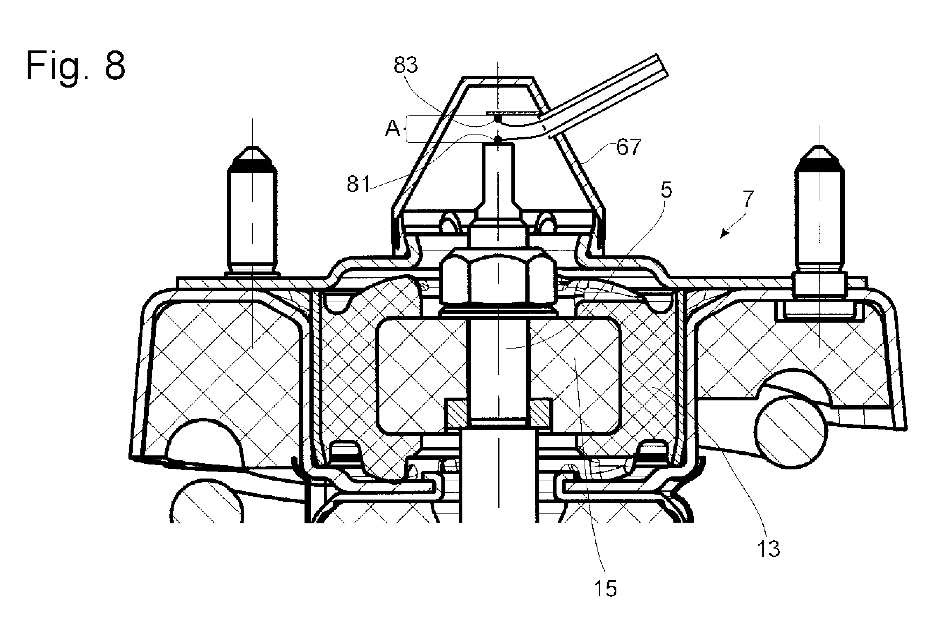

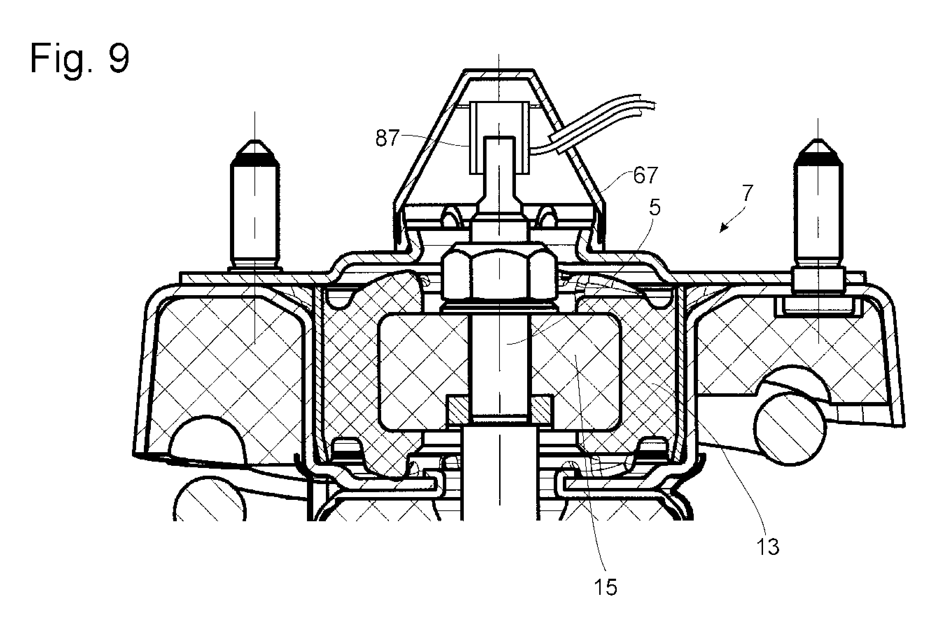

Die beiden Fig. 8 und 9 zeigen ein im Aufbau zu den bereits beschriebenen Varianten identisches Führungslager 7. Abweichen wird im Überlastfall des Schwingungsdämpfers ein elektrisches Signal erzeugt. In der Fig. 8 ist an der Verdrängerstange 7 eine erster elektrischer Schaltkontakt 81 befestigt, der nach Überwindung des Abstands A bei einem Überlastungsfall mit einem zweiten Schaltkontakt 83 in Kontakt gebracht wird, so dass über den nun geschlossenen Stromkreis ein Signalstrom fließen kann. Sinnvollerweise ist der zweite Schaltkontakt 83 in der Kontaktstellung in Grenzen axial beweglich. In der Figur 9 wird das elektrische Signal durch die Kombination des freien Endes der Verdrängerstange 5 und einer ortsfesten Tauschspule 87 erzeugt. Diese Lösung bietet den zusätzlichen Vorteil, dass man in Verbindung mit einer entsprechenden Elektronik nicht nur auf die Anzahl der Überlastfälle, sondern anhand der Signalstärke auch gleich auf das Maß der Überlastung des Schwingungsdämpfers schließen kann.

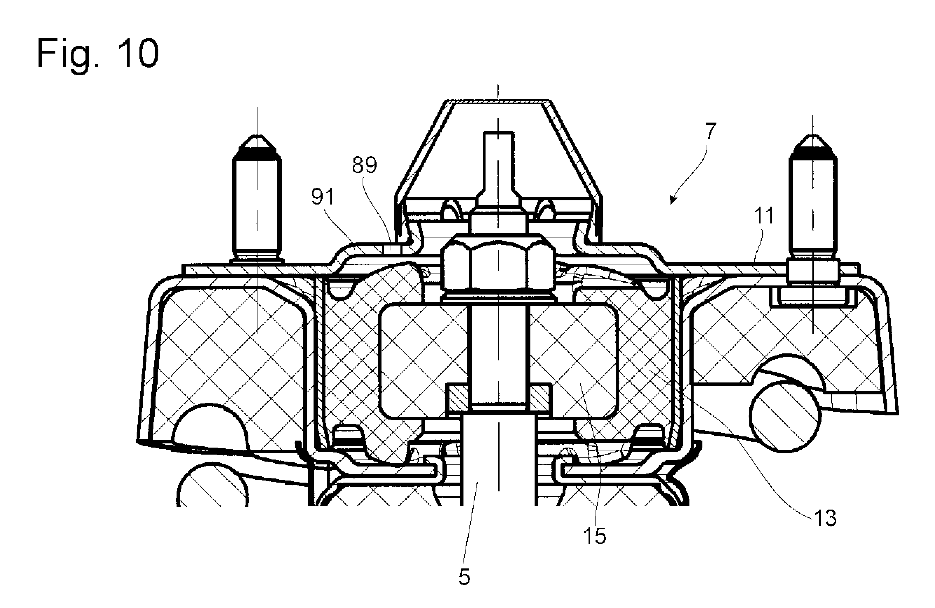

Bei der Variante nach Fig. 10 verfügt das Gehäuse 11 des Führungslagers, in dem der Elastomerkörper 13 verspannt ist über eine Ausnehmung 89. Bei einer Schwingbewegung des Schwingungsdämpfers stützt sich die auf die Kolbenstange wirksame Dämpfkraft am Elastomerkörper 13 ab. Der Elastomerkörper wird von dem Gehäuse in seiner vorbestimmten Einbaulage gehalten. Wird diese Einbaulage bei einem Überlastfall verlassen, dann kommt der Elastomerkörper mit einer Deckfläche 91 in Kontakt, in der die Ausnehmung 89 ausgeführt ist. Bei einem Kontakt zwischen der Ausnehmung 89 und dem Elastomerkörper kommt es zu einer optischen Veränderung bzw. einer Oberflächenbeschädigung des Elastomerkörpers 13. Die Veränderung kann sich z. B. als ringförmige Druckstelle ausbilden.

## Patentansprüche

1. Schwingungsdämpfer (1), umfassend einen mit Dämpfmedium gefüllten Zylinder (3), indem eine Verdrängerstange (5) axial beweglich angeordnet ist, wobei der Schwingungsdämpfer mindestens zwei Arbeitsräume (23; 25; 27) umfasst, wobei zwischen zwei Arbeitsräumen (23; 25; 27) mindestens ein Dämpfventil (19; 21; 37; 51; 53; 55) angeordnet ist und das freie Ende der Verdrängerstange (5) mit einem Führungslager (7) verbunden ist, das den Anschluss an ein Fahrzeug ermöglicht, wobei das Führungslager (7) über einen Elastomerkörper (13) verfügt, der eine in Grenzen axiale Bewegung der Verdrängerstange (13) zum Fahrzeug ermöglicht,
**dadurch gekennzeichnet,**
**dass** der Schwingungsdämpfer (1) über eine dämpfkraftabhängige Überlastanzeige verfügt.

2. Schwingungsdämpfer nach Anspruch 1, wobei das Dämpfventil (51; 53; 55) über mindestens eine Durchtrittsöffnung (55) verfügt, die mit mindestens einer elastischen Ventilscheibe (51) auf mindestens einer Stirnfläche zumindest teilweise abgedeckt ist,
**dadurch gekennzeichnet,**
**dass** der mindestens einen elastischen Ventilscheibe (51) auf ihrer von der Durchtrittsöffnung (55) abgewandten Seite eine plastisch verformbare Indikatorscheibe (57) nachgeordnet ist.

3. Schwingungsdämpfer nach Anspruch 1,
**dadurch gekennzeichnet,**
**dass** in einer hohlen Verdrängerstange (5) ein Dichtkörper (61) dämpfmediumdicht eingepresst ist, der in Abhängigkeit des Dämpfdrucks axial verschiebbar ist.

4. Schwingungsdämpfer nach Anspruch 2,
**dadurch gekennzeichnet,**
**dass** die hohle Verdrängerstange (5) über mindestens einen axialen Anschlag (65) für den Dichtkörper (61) verfügt.

5. Schwingungsdämpfer nach Anspruch 3,
**dadurch gekennzeichnet,**
**dass** auf der Innenmantelfläche der hohlen Verdrängerstange (5) eine Markierung (63) ausgeführt ist, die eine Axialverschiebung des Dichtkörpers (61) messbar macht.

6. Schwingungsdämpfer nach Anspruch 1,
**dadurch gekennzeichnet,**
**dass** die Überlastanzeige auf einer Relativbewegung des Schwingungsdämpfers (1) zum Fahrzeug beruht.

7. Schwingungsdämpfer nach Anspruch 6,
**dadurch gekennzeichnet,**
**dass** zur Überlastanzeige eine zum Fahrzeug ortsfeste Komponente zumindest mittelbar mit der Verdrängerstange (5) zusammenwirkt.

8. Schwingungsdämpfer nach Anspruch 7,
**dadurch gekennzeichnet,**
**dass** im Überlastfall ein elektrisches Signal erzeugt wird.

9. Schwingungsdämpfer nach Anspruch 8,
**dadurch gekennzeichnet,**
**dass** das Aufeinandertreffen einer verdrängerstangeseitigen Kontaktfläche (81) mit einer zum Fahrzeug ortsfesten Kontaktfläche (83) das elektrisches Signal erzeugt.

10. Schwingungsdämpfer nach Anspruch 8,
**dadurch gekennzeichnet,**
**dass** das Eintauchen des freien Endes der Verdrängerstange (5) in eine zum Fahrzeug ortsfesten Tauchspule (87) das elektrisches Signal hervorruft.

11. Schwingungsdämpfer nach Anspruch 10,
**dadurch gekennzeichnet,**
**dass** das freie Ende der Verdrängerstange (5) zumindest magnetisierbar ist.

12. Schwingungsdämpfer nach Anspruch 7,
**dadurch gekennzeichnet,**
**dass** das freie Ende der Verdrängerstange (5) im Überlastfall auf ein zum Fahrzeug ortsfestes mit Indikatormittel befülltes Behältnis (73) trifft, welches **dadurch** ihr Indikatormittel freigibt.

13. Schwingungsdämpfer nach Anspruch 7,
**dadurch gekennzeichnet,**
**dass** das freie Ende der Verdrängerstange (5) im Überlastfall mit einer ortsfest zum Fahrzeug angebrachten Indikatorfläche (69) in Kontakt tritt.

14. Schwingungsdämpfer nach Anspruch 13,
**dadurch gekennzeichnet,**
**dass** das Indikatorfläche (69) durch den Kontakt plastisch verformt wird.

15. Schwingungsdämpfer nach Anspruch 13,
**dadurch gekennzeichnet,**
**dass** die Indikatorfläche (69) über eine Oberflächenbeschichtung verfügt, welche unter Kontakt veränderbar ist.

16. Schwingungsdämpfer nach Anspruch 7,
**dadurch gekennzeichnet,**
**dass** das freie Ende der Verdrängerstange (5) mit ihrer Mantelfläche (77) im Überlastfall auf einem Längenabschnitt unter Reibkontakt mit einem zum Fahrzeug ortsfesten Bauteil (79) steht.

17. Schwingungsdämpfer nach mindestens einem der Ansprüche 1 bis 16, wobei das Führungslager (7) über ein Gehäuse (11) verfügt, das vom freien Ende der Verdrängerstange (5) durchdrungen wird,
**dadurch gekennzeichnet,**
**dass** sich dem Gehäuse (11) eine Kappe (67) zur Abdeckung des freien Endes der Verdrängerstange (5) anschließt, wobei die Kappe (67) ortsfest zum Fahrzeug angeordnet ist.

18. Schwingungsdämpfer nach Anspruch 17,
**dadurch gekennzeichnet,**
**dass** die zum Fahrzeug ortsfeste Komponente (69; 73; 79; 83; 87innerhalb der Kappe (11) angeordnet ist.

19. Schwingungsdämpfer nach Anspruch 7, wobei das Führungslager (7) ein Gehäuse (11) umfasst, indem der Elastomerkörper (13) verspannbar ist, wobei an der Verdrängerstange (5) eine Stützscheibe (15) angeordnet ist, an der sich der Elastomerkörper (13) abstützt,
**dadurch gekennzeichnet,**
**dass** das Gehäuse (11) über eine Ausnehmung (89) verfügt, in welche sich der Elastomerkörper (13) bei einer Axialbewegung der Verdrängerstange (5) hineinverformt und sich **dadurch** zumindest optisch verändert.
